# EUROPÄISCHE PATENTSCHRIFT

(11) **EP 3 917 793 B1**
(45) Veröffentlichungstag und Bekanntmachung des Hinweises auf die Patenterteilung: **15.03.2023**
(21) Anmeldenummer: 20701693.2
(22) Anmeldetag: 14.01.2020
(51) Int. Cl.: B60J 1/00, B60J 3/04, B60K 35/00, B60K 37/06, B32B 17/10, B60R 1/00, B60J 7/16, G02F 1/133

(54) **VERFAHREN ZUR STEUERUNG EINER VIELZAHL VON ZUGEORDNETEN ELEKTRISCH STEUERBAREN TRANSMISSIONSSCHALTELEMENTEN EINER ERSTEN MENGE IN EINER DACHSCHEIBE FÜR EIN FAHRZEUG UND DACHSCHEIBE ZUR STEUERUNG DURCH EIN DERARTIGES VERFAHREN**
METHOD FOR CONTROLLING A PLURALITY OF ASSIGNED ELECTRICALLY CONTROLLABLE TRANSMISSION SWITCH ELEMENTS OF A FIRST SET IN A SUNROOF FOR VEHICLE AND SUNROOF CONTROLLED BY SUCH A METHOD
PROCÉDÉ DE COMMANDE D'UNE PLURALITÉ D'ÉLÉMENTS DE COMMUTATION DE TRANSMISSION À COMMANDE ÉLECTRIQUE ASSOCIÉS D'UNE PREMIÈRE QUANTITÉ DANS UNE VITRE DE TOIT POUR UN VÉHICULE ET VITRE DE TOIT DESTINÉE À ÊTRE COMMANDÉE AU MOYEN D'UN TEL PROCÉDÉ

(30) Priorität: 28.01.2019 EP 19153929
(43) Veröffentlichungstag der Anmeldung: 08.12.2021
(73) Patentinhaber: Saint-Gobain Glass France, 92400 Courbevoie (FR)
(72) Erfinder: MANZ, Florian, 52064 Aachen (DE); HAMMOUD, Rayan, 51065 Köln (DE)
(74) Vertreter: Gebauer, Dieter Edmund
(86) Internationale Anmeldenummer: PCT/EP2020/050743
(87) Internationale Veröffentlichungsnummer: WO 2020/156795

(56) Entgegenhaltungen:
- WO-A1-2018/182676
- DE-A1-102011 002 801
- DE-A1-102011 003 256
- DE-A1-102013 001 334
- US-A1- 2015 097 389
- US-B2- 9 365 161
- Concept Investment: "Smart Section Blind Vitswell mockup", , 9 February 2017 (2017-02-09), XP055954136, Retrieved from the Internet: URL:https://www.youtube.com/watch?v=YHCwzh j_Hws [retrieved on 2022-08-23]

## Beschreibung

Die Erfindung betrifft ein Verfahren zur Steuerung einer Vielzahl von zugeordneten elektrisch steuerbaren Transmissionsschaltelementen einer ersten Menge in einer Dachscheibe für ein Fahrzeug und Dachscheibe zur Steuerung durch ein derartiges Verfahren.

Es ist bekannt Fahrzeuge mit Dachscheiben auszustatten. Es zeigt sich aber, dass es abhängig von der Sonneneinstrahlung Situationen gibt, in denen eine unmittelbare Belichtung der Fahrzeuginsassen oder von anderen Einrichtungen unerwünscht ist.

Hierfür wurden in der Vergangenheit steuerbare Elemente entwickelt, mit denen die Transparenzeigenschaften schaltbar gestaltbar sind.

Ein beispielhaftes schaltbares Transparenzelement ist in Bezug auf eine Windschutzscheibe aus der WO 2017 / 157 626 A1 der Anmelderin bekannt. Eine beispielhafte Dachscheibe ist aus der deutschen Patentanmeldung DE 10 2011 002 801 A1, dem US Patent 9,365,161 B2 bekannt.

Es gibt jedoch Situationen in denen nicht alle Insassen gleichermaßen von einer Änderung der Transparenzeigenschaften profitieren.

Aus der internationalen Patentanmeldung WP 2018 / 182 676 A1 ist ein Verfahren zur Steuerung der Färbung einer Fahrzeugscheibe in Abhängigkeit von Besetzung des Fahrzeuges, Ort und Richtung des Sonnenlichtes bekannt. Aus der deutschen Patentanmeldung 10 2013 001 334 ist eine gestengesteuerte Abdunklung einer Windschutzescheibe bekannt. Aus der deutschen Patentanmeldung DE 10 2011 003 256 A1 ist eine schaltgesteuerte Steuerung eines Sonnenkeils in einer Windschutzscheibe bekannt.

Zudem ist festzustellen, dass für Bedienelemente wenig Platz zur Verfügung steht.

Vor diesem Hintergrund ist es eine Aufgabe der Erfindung eine verbesserte Dachscheibe und Steuerung durch ein entsprechendes Verfahren zur Verfügung zu stellen.

Die Aufgabe wird gelöst durch ein Verfahren zur Steuerung einer Vielzahl von zugeordneten elektrisch steuerbaren Transmissionsschaltelementen einer ersten Menge in einer Dachscheibe für ein Fahrzeug, wobei die Transmissionsschaltelemente der ersten Menge hintereinander angeordnet sind, wobei ein erstes randständiges Transmissionsschaltelement und ein zweites randständiges Transmissionsschaltelement vorgesehen ist, wobei zur Steuerung zumindest ein erstes Schaltelement und ein zweites Schaltelement zur Verfügung stehen, aufweisend den Schritt des Empfangens eines ersten Schaltzustandes des ersten Schaltelements innerhalb einer vorbestimmten Zeit, wobei, wenn alle Transmissionsschaltelemente der ersten Menge opak sind, das zweite randständige Transmissionsschaltelement transparent geschaltet wird, wenn alle Transmissionsschaltelemente der ersten Menge transparent sind, das zweite randständige Transmissionsschaltelement opak geschaltet wird, wenn das erste randständige Transmissionsschaltelement opak ist und das zweite randständige Transmissionsschaltelement transparent ist, das Transmissionsschaltelement, welches unmittelbar benachbart zu einem transparenten Transmissionsschaltelement der ersten Menge ist, transparent geschaltet wird, den Schritt des Empfangens eines ersten Schaltzustandes des zweiten Schaltelements innerhalb einer vorbestimmten Zeit, wobei, wenn alle Transmissionsschaltelemente der ersten Menge opak sind, das erste randständige Transmissionsschaltelement transparent geschaltet wird, wenn alle Transmissionsschaltelemente der ersten Menge transparent sind, das erste randständige Transmissionsschaltelement opak geschaltet wird, wenn das zweite randständige Transmissionsschaltelement opak ist und das erste randständige Transmissionsschaltelement transparent ist, das Transmissionsschaltelement, welches unmittelbar benachbart zu einem transparenten Transmissionsschaltelement der ersten Menge ist, transparent geschaltet wird.

D.h. die Erfindung erlaubt es eine effektive Steuerung einer Vielzahl von Transmissionsschaltelementen mit einer geringen Anzahl von Schaltelementen in einer schiebeartigen Abfolge in beide Richtungen zur Verfügung zu stellen.

In einer Ausführungsform der Erfindung weist das Verfahren weiterhin den Schritt des Empfangens einer Abfolge von ersten Schaltzuständen des ersten Schaltelements innerhalb einer vorbestimmten Zeit auf, wobei, wenn das erste randständige Transmissionsschaltelement transparent ist, alle Transmissionsschaltelemente der ersten Menge opak geschaltet werden, wenn das erste randständige Transmissionsschaltelement opak ist, alle Transmissionsschaltelemente der ersten Menge transparent geschaltet werden.

D.h. die Erfindung erlaubt es eine effektive Steuerung einer Vielzahl von Transmissionsschaltelementen mit einer geringen Anzahl von Schaltelementen in einer auf alle Transmissionsschaltelemente wirkenden Weise zur Verfügung zu stellen.

In einer Ausführungsform der Erfindung weist die Dachscheibe weiterhin eine zweite Menge von Transmissionsschaltelementen auf, wobei die Transmissionsschaltelemente der zweiten Menge hintereinander angeordnet sind, wobei ein erstes randständiges Transmissionsschaltelement und ein zweites randständiges Transmissionsschaltelement vorgesehen ist, wobei das erste randständige Transmissionsschaltelement der zweiten Menge benachbart zu dem zweiten randständigen Transmissionsschaltelement der ersten Menge ist, aufweisend den Schritt des Empfangens einer Abfolge von ersten Schaltzuständen des zweiten Schaltelements innerhalb einer vorbestimmten Zeit, wobei, nachfolgend hierzu ein erster Schaltzustand des ersten Schaltelements innerhalb einer vorbestimmten Zeit empfangen wird wobei, wenn alle Transmissionsschaltelemente der zweiten Menge opak sind, das zweite randständige Transmissionsschaltelement transparent geschaltet wird, wenn alle Transmissionsschaltelemente der zweiten Menge transparent sind, das zweite randständige Transmissionsschaltelement opak geschaltet wird, wenn das erste randständige Transmissionsschaltelement opak ist und das zweite randständige Transmissionsschaltelement transparent ist, das Transmissionsschaltelement, welches unmittelbar benachbart zu einem transparenten Transmissionsschaltelement der zweiten Menge ist, transparent geschaltet wird, und den Schritt des Empfangens eines ersten Schaltzustandes des zweiten Schaltelements innerhalb einer vorbestimmten Zeit, wobei, wenn alle Transmissionsschaltelemente der zweiten Menge opak sind, das erste randständige Transmissionsschaltelement transparent geschaltet wird, wenn alle Transmissionsschaltelemente der zweiten Menge transparent sind, das erste randständige Transmissionsschaltelement opak geschaltet wird, wenn das zweite randständige Transmissionsschaltelement opak ist und das erste randständige Transmissionsschaltelement transparent ist, das Transmissionsschaltelement, welches unmittelbar benachbart zu einem transparenten Transmissionsschaltelement der zweiten Menge ist, transparent geschaltet wird.

D.h. mittels der Erfindung kann eine Scheibe auch in Teilmengen untergliedert sein, wobei die Teilmengen getrennt oder als eine vereinigte Menge angesteuert werden können. Hierdurch wird die Flexibilität der Steuerung für die Nutzer erhöht.

In einer weiteren Ausführungsform der Erfindung weist das Verfahren weiterhin den Schritt des Empfangens einer Abfolge von ersten Schaltzuständen des ersten Schaltelements innerhalb einer vorbestimmten Zeit auf, wobei, wenn das erste randständige Transmissionsschaltelement der zweiten Menge transparent ist, alle Transmissionsschaltelemente der zweiten Menge opak geschaltet werden, wenn das erste randständige Transmissionsschaltelement der zweiten Menge opak ist, alle Transmissionsschaltelemente der ersten Menge transparent geschaltet werden.

Gemäß einer weiteren Ausgestaltung der Erfindung wird eine Dachscheibe mit einer Vielzahl von zugeordneten elektrisch steuerbaren Transmissionsschaltelementen einer ersten Menge bereitgestellt, wobei die Transmissionsschaltelemente der ersten Menge hintereinander angeordnet sind, wobei ein erstes randständiges Transmissionsschaltelement und ein zweites randständiges Transmissionsschaltelement vorgesehen ist, wobei zur Steuerung zumindest ein erstes Schaltelement und ein zweites Schaltelement zur Verfügung stehen, wobei das erste Schaltelement und das zweite Schaltelement zur Steuerung eines erfindungsgemäßen Verfahrens eingerichtet sind.

D.h. die Erfindung erlaubt es eine effektive Steuerung einer Vielzahl von Transmissionsschaltelementen mit einer geringen Anzahl von Schaltelementen in einer schiebeartigen Abfolge in beide Richtungen zur Verfügung zu stellen.

Gemäß einer weiteren Ausführungsform weist die Dachscheibe weiterhin eine zweite Menge von Transmissionsschaltelementen auf, wobei die Transmissionsschaltelemente der zweiten Menge hintereinander angeordnet sind, wobei ein erstes randständiges Transmissionsschaltelement und ein zweites randständiges Transmissionsschaltelement vorgesehen ist, wobei das erste randständige Transmissionsschaltelement der zweiten Menge benachbart zu dem zweiten randständigen Transmissionsschaltelement der ersten Menge ist, wobei zur Steuerung zumindest ein erstes Schaltelement und ein zweites Schaltelement zur Verfügung stehen, wobei das erste Schaltelement und das zweite Schaltelement zur Steuerung eines erfindungsgemäßen Verfahrens eingerichtet ist.

D.h. mittels der Erfindung kann eine Scheibe auch in Teilmengen untergliedert sein, wobei die Teilmengen getrennt oder als eine vereinigte Menge angesteuert werden können. Hierdurch wird die Flexibilität der Steuerung für die Nutzer erhöht.

Gemäß einer weiteren Ausführungsform der Erfindung sind das erste Schaltelement und das zweite Schaltelement auf einer Seite der Dachscheibe angeordnet oder auf einer graphischen Bedienoberfläche angeordnet.

Gemäß noch einer weiteren Ausführungsform der Erfindung weisen die Transmissionsschaltelemente PDLC Elemente auf.

Ohne Beschränkung der Allgemeinheit erlaubt die Erfindung auch die Bereitstellung von Fahrzeugen mit einer Scheibe gemäß der Erfindung. Das Fahrzeug kann dabei insbesondere ein Land-, ein See-, ein Luft- oder ein Raumfahrzeug sein, ohne Mischformen hiervon auszuschließen.

Im Folgenden wird die Erfindung anhand von Zeichnungen und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen schematischen Ablauf eines Verfahrens zur Steuerung gemäß Aspekten der Erfindung,
- Fig. 2: eine schematische Ansicht einer Dachscheibe mit elektrisch steuerbaren Transmissionsschaltelementen gemäß Aspekten der Erfindung in einem ersten Zustand,
- Fig. 3: eine schematische Ansicht der Dachscheibe mit elektrisch steuerbaren Transmissionsschaltelementen aus Figur 1 in einem zweiten Zustand,
- Fig. 4: eine schematische Ansicht einer Dachscheibe mit elektrisch steuerbaren Transmissionsschaltelementen gemäß weiteren Aspekten der Erfindung,
- Fig. 5: eine schematische Ansicht einer Steuerung einer Dachscheibe mit elektrisch steuerbaren Transmissionsschaltelementen gemäß einer Ausführungsform der Erfindung,
- Fig. 6: eine schematische Ansicht einer Steuerung einer Dachscheibe mit elektrisch steuerbaren Transmissionsschaltelementen gemäß einer weiteren Ausführungsform der Erfindung
- Fig. 7: eine schematische Ansicht einer Dachscheibe mit elektrisch steuerbaren Transmissionsschaltelementen gemäß weiteren Aspekten der Erfindung, und
- Fig. 8: eine schematische Darstellung einer Benutzeroberfläche in Bezug zur Steuerung einer Dachscheibe mit elektrisch steuerbaren Transmissionsschaltelementen gemäß einer weiteren Ausführungsform der Erfindung.

In den Figuren sind verschiedene Ausführungsformen dargestellt. Soweit in den Figuren und in der zugehörigen Beschreibung auf Vorne / Hinten / Rechts und Links Bezug genommen wird, wird im Folgenden angenommen, dass eine mögliche (Haupt-) Fahrtrichtung bei Verwendung in einem Fahrzeug durch den Pfeil gegeben ist. D.h. in Pfeilrichtung ist Vorne und bezogen hierauf als Blickrichtung ist links am unteren Ende der Figur und rechts am oberen Ende der Figur.

Soweit in der folgenden Beschreibung Transmissionsschaltelement, transparent und opak verwendet wird, ist hiermit jegliche Beeinflussung der Transparenz gemeint. Dabei kann auch eine Änderung der Farbe zu einer Beeinflussung der Transparenz in einem beschränkten Wellenlängenbereich (des sichtbaren Lichtes) führen. D.h. ein Transmissionsschaltelement kann binär als auch stufig von einer insbesondere im sichtbaren Lichtbereich zumindest teilweise durchsichtigen ("transparent") in einen weniger stark durchsichtigen ("opaken") Zustand versetzt werden. Hierzu kann eine geeignete Spannung bzw. ein geeigneter Strom in Bezug auf das jeweilige Transmissionsschaltelement eingeprägt werden. In Ausführungsformen der Erfindung sind die Transmissionsschaltelemente als Flüssigkristallelement, insbesondere als Polymer-Flüssigkristallelement (engl. polymer dispersed liquid crystal, abgekürzt PDLC) oder als Polymer Dispersed Network Display (PNLC), oder als elektrochromes Transmissionsschaltelement ausgeführt.

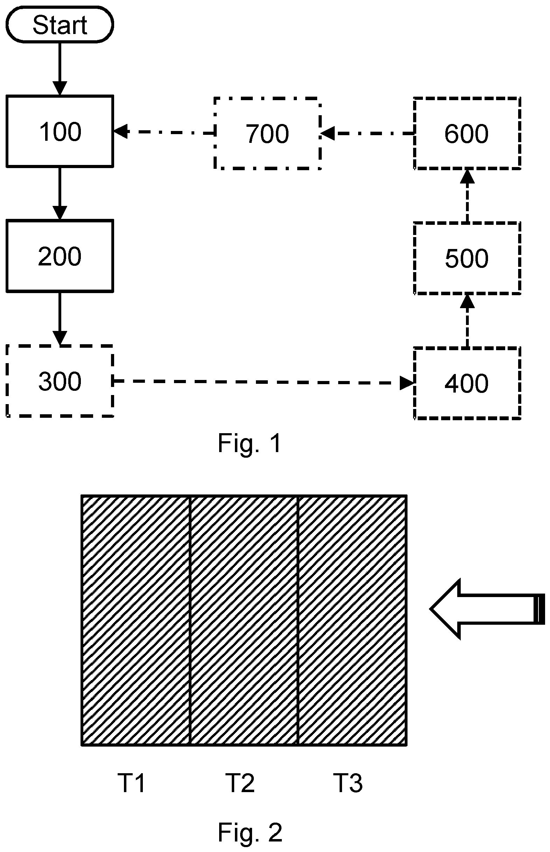

In den Figuren 2, 3, 5 und 6 ist eine beispielhafte Dachscheibe gemäß der Erfindung mit einer ersten Menge M1 von zugeordneten elektrisch steuerbaren Transmissionsschaltelementen T1, T2, T3 gezeigt. Die genaue Anzahl der schaltbaren Elemente innerhalb der ersten Menge M1 kann auch höher oder geringer sein.

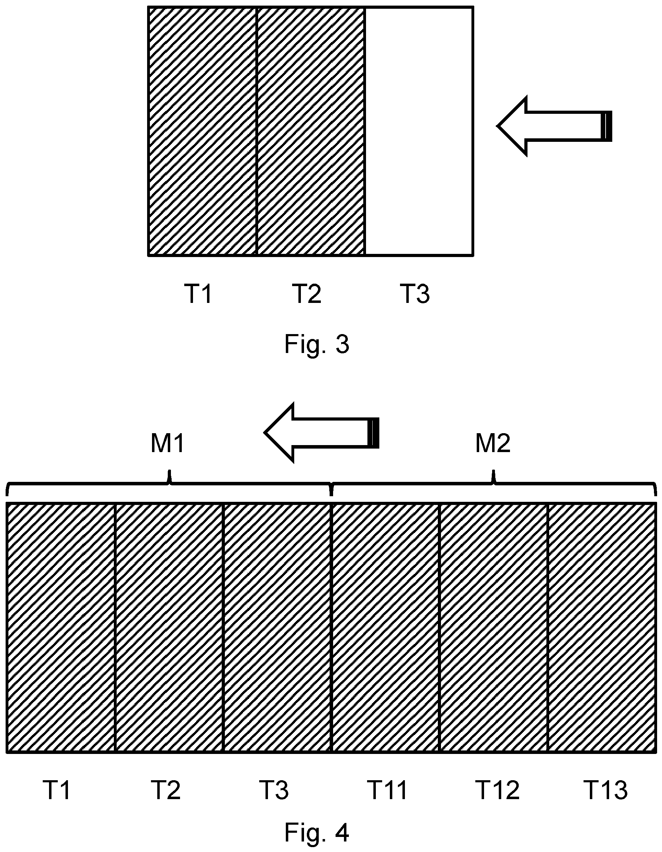

In der Figur 4 ist eine weitere beispielhafte Dachscheibe gemäß der Erfindung mit einer ersten Menge M1 von zugeordneten elektrisch steuerbaren Transmissionsschaltelementen T1, T2, T3 und einer zweiten Menge M2 von zugeordneten elektrisch steuerbaren Transmissionsschaltelementen T11, T12, T13 gezeigt. Die genaue Anzahl der schaltbaren Elemente innerhalb der ersten Menge M1 bzw. innerhalb der zweiten Menge M2 kann auch höher oder geringer sein. D.h. hier sind die Mengen hintereinander angeordnet.

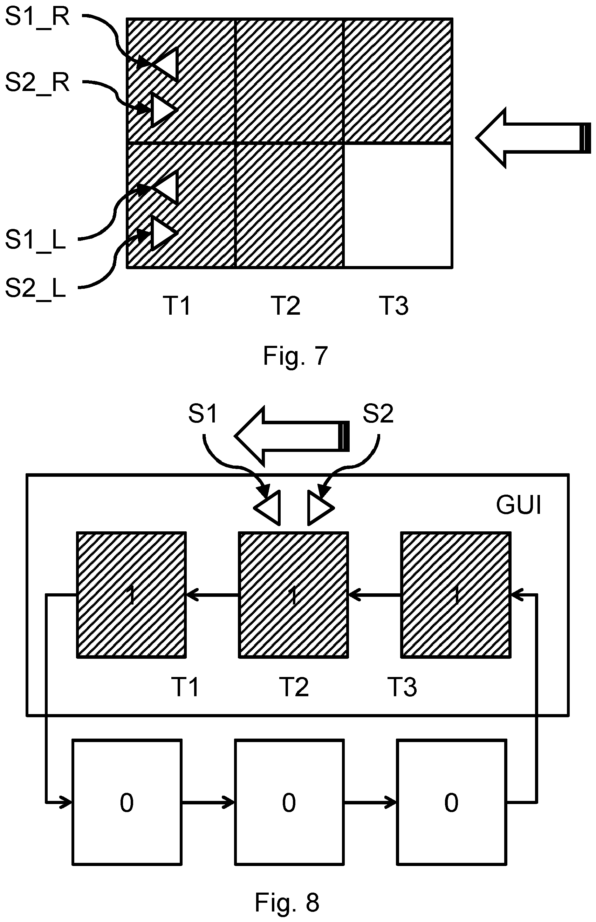

In Figur 7 ist eine weitere beispielhafte Dachscheibe gemäß der Erfindung dargestellt. Allerdings sind hier in Fahrtrichtung nebeneinanderliegend erste Mengen M1 aufgezeigt, die unabhängig voneinander gesteuert sein können. Entsprechenderweise können dann für die nebeneinanderliegenden Mengen jeweilige Schaltelemente S1_L, S2_L, bzw. S1_R, S2_R vorgesehen sein. In einem Kraftfahrzeug kann zudem vorgesehen sein, dass die Steuerung des Fahrers (z.B. bei Linkslenker S1_L, S2_L) als Mastersteuerung auf die nebeneinanderliegenden Mengen einwirkt.

Im Folgenden wird zunächst die Steuerung nur in Bezug auf eine erste Menge M1 erläutert werden. Diese Steuerung kann in allen Ausführungsformen der Erfindung zum Einsatz kommen.

Die Dachscheibe gemäß der Erfindung weist zumindest eine Vielzahl von zugeordneten elektrisch steuerbaren Transmissionsschaltelementen T1, T2, T3 in einer ersten Menge M1 auf, wobei die Transmissionsschaltelemente T1, T2, T3 der ersten Menge M1 (in Fahrtrichtung) hintereinander angeordnet sind.

Im Folgenden gehen wir von 3 Elementen innerhalb der ersten Menge M1 aus. Dann bildet T1 ein erstes randständiges Transmissionsschaltelement (Vorne) und T2 ein zweites randständiges Transmissionsschaltelement (Hinten).

Zur Steuerung stehen zumindest ein erstes Schaltelement S1 und ein zweites Schaltelement S2 zur Verfügung.

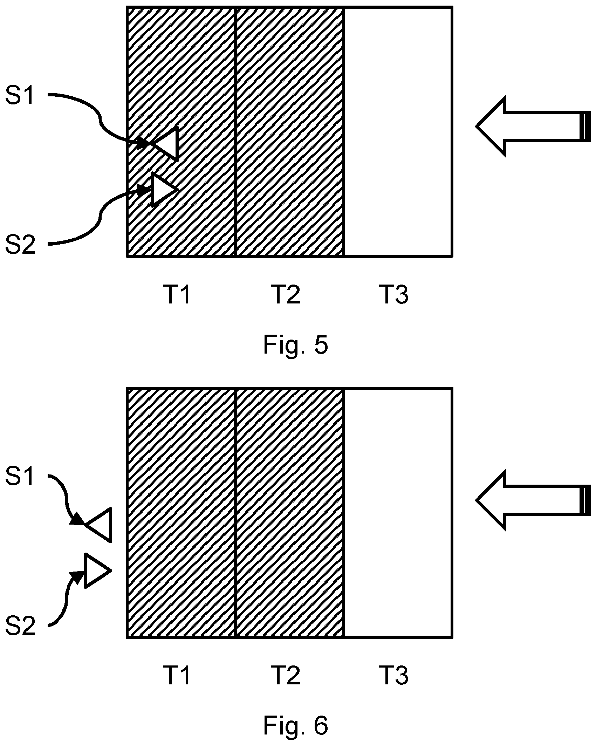

Schaltelemente S1, S2 können als eigenständige Schaltelemente an geeigneter Stelle (im Fahrzeug) wie in Figur 6 und 7 gezeigt angeordnet sein, und/oder als Schaltelemente in die Scheibe integriert sein - wie in Figur 5 gezeigt - , und/oder über eine graphische Bedienoberfläche GUI - wie in Fig. 8 gezeigt -, welches drahtgebunden oder drahtlos zur Steuerung geeignet ist, zur Verfügung gestellt sein. Gleichermaßen können die Schaltelemente S1, S2 auch in einem kombinierten Dreh- oder Wippschalter integriert sein. Ohne Beschränkung der Allgemeinheit kann auch durch Spracherkennung eine Schaltung bewirkt werden.

Das erste Schaltelement S1 und das zweite Schaltelement S2 sind zur Steuerung von Verfahren eingerichtet, die nachfolgend erläutert werden.

Beispielsweise wird in einem Schritt 100 ein erster Schaltzustand des ersten Schaltelements S1 innerhalb einer vorbestimmten Zeit empfangen. Abhängig vom bisherigen Zustand der Transmissionsschaltelemente T1, T2, T3 wird nunmehr eine Schaltung in einen neuen Zustand veranlasst.

Wenn alle Transmissionsschaltelemente T1, T2, T3 der ersten Menge M1 opak sind, wird das zweite randständige Transmissionsschaltelement T3 transparent geschaltet. Wenn hingegen alle Transmissionsschaltelemente T1, T2, T3 der ersten Menge M1 transparent sind, wird das zweite randständige Transmissionsschaltelement T3 opak geschaltet. Wenn jedoch das erste randständige Transmissionsschaltelement T1 opak ist und das zweite randständige Transmissionsschaltelement T3 transparent ist, wird das Transmissionsschaltelement T2, welches unmittelbar benachbart zu einem transparenten Transmissionsschaltelement der ersten Menge ist, transparent geschaltet.

Wird hingegen in Schritt 200 ein erster Schaltzustand des zweiten Schaltelements S2 innerhalb einer vorbestimmten Zeit empfangen so wird abhängig vom bisherigen Zustand der Transmissionsschaltelemente T1, T2, T3 nunmehr eine andere Schaltung in einen neuen Zustand veranlasst.

Wenn alle Transmissionsschaltelemente T1, T2, T3 der ersten Menge M1 opak sind, wird das erste randständige Transmissionsschaltelement T1 transparent geschaltet. Wenn hingegen alle Transmissionsschaltelemente T1, T2, T3 der ersten Menge M1 transparent sind, wird das erste randständige Transmissionsschaltelement T1 opak geschaltet. Wenn jedoch das zweite randständige Transmissionsschaltelement T3 opak ist und das erste randständige Transmissionsschaltelement T1 transparent ist, wird das Transmissionsschaltelement T2, welches unmittelbar benachbart zu einem transparenten Transmissionsschaltelement der ersten Menge ist, transparent geschaltet.

Offensichtlich kann die Menge M1 auch mehr Transmissionsschaltelemente enthalten. Dann werden die Transmissionsschaltelemente vorhangartig zunehmend bzw. abnehmend geschaltet, indem ein Wechsel von einem Zustand zu einem anderen Zustand jeweils an der Grenze von opaken zu transparenten Transmissionsschaltelementen stattfindet.

D.h., die Erfindung erlaubt es die Transparenzeigenschaften in vielfältiger Weise für Insassen eines Fahrzeuges zu steuern. Beispielsweise kann nur ein Teilbereich "opak" geschaltet werden, während ein anderer Bereich transparent geschaltet ist. Dabei kann die Steuerung äußerst platzsparend ausgeführt werden. D.h. die Erfindung erlaubt es eine effektive Steuerung einer Vielzahl von Transmissionsschaltelementen mit einer geringen Anzahl von Schaltelementen in einer schiebeartigen Abfolge in beide Richtungen zur Verfügung zu stellen.

In einer Ausgestaltung des Verfahrens kann zudem vorgesehen sein, dass innerhalb einer vorbestimmten Zeit nicht nur ein einziger Schaltzustand erfasst wird, sondern eine Abfolge von Schaltzuständen.

Eine Abfolge von Schaltzuständen kann auch durch ein Dauerschalten innerhalb der vorbestimmten Zeit verkörpert sein. Dann kann z.B. ein Dauerschaltzustand als einzelner Flankenwechsel innerhalb einer vorbestimmten Zeit erkannt werden, während ein einzelner Schaltzustand als doppelter Flankenwechsel erkannt werden kann. Hierdurch sind natürlich andere Implementierungen nicht ausgeschlossen. Vielmehr ist ein einzelner Schaltzustand und Abfolgen von Schaltzuständen als unterscheidbare Aktionen an einem einzigen Schaltelement zu verstehen.

Beispielsweise kann das Verfahren weiterhin den Schritt des Empfangens 300 einer Abfolge von ersten Schaltzuständen des ersten Schaltelements S1 innerhalb einer vorbestimmten Zeit aufweisen, wobei, wenn das erste randständige Transmissionsschaltelement T1 transparent ist, alle Transmissionsschaltelemente T1, T2, T3 der ersten Menge opak geschalten werden, und wenn das erste randständige Transmissionsschaltelement T1 opak ist, alle Transmissionsschaltelemente T1, T2, T3 der ersten Menge transparent geschaltet werden.

D.h. die Erfindung erlaubt es eine effektive Steuerung einer Vielzahl von Transmissionsschaltelementen mit einer geringen Anzahl von Schaltelementen in einer auf alle Transmissionsschaltelemente wirkenden Weise zur Verfügung zu stellen.

Weist die Dachscheibe weiterhin eine zweite Menge M2 von Transmissionsschaltelementen T11, T12, T13 auf, so können die Transmissionsschaltelemente T11, T12, T13 der zweiten Menge M2 ebenfalls wie in Figur 4 gezeigt hintereinander angeordnet sein, wobei ein erstes randständiges Transmissionsschaltelement T11 der zweiten Menge M2 und ein zweites randständiges Transmissionsschaltelement T13 der zweiten Menge M2 vorgesehen ist, wobei das erste randständige Transmissionsschaltelement T11 der zweiten Menge M2 benachbart zu dem zweiten randständigen Transmissionsschaltelement T3 der ersten Menge M1 ist.

D.h. mittels der Erfindung kann eine Scheibe auch in Teilmengen untergliedert sein, wobei die Teilmengen getrennt oder als eine vereinigte Menge angesteuert werden kann. Hierdurch wird die Flexibilität der Steuerung für die Nutzer erhöht.

In diesem Fall kann das Verfahren den Schritt des Empfangens 400 einer Abfolge von ersten Schaltzuständen des zweiten Schaltelements S2 innerhalb einer vorbestimmten Zeit zusätzlich aufweisen. Wird nachfolgend hierzu ein erster Schaltzustand des ersten Schaltelements S1 innerhalb einer vorbestimmten Zeit empfangen 500, so wird abhängig vom bisherigen Zustand der Transmissionsschaltelemente T11, T12, T13 der zweiten Menge nunmehr eine andere Schaltung in einen neuen Zustand veranlasst.

Wenn alle Transmissionsschaltelemente T11, T12, T13 der zweiten Menge M2 opak sind, wird das zweite randständige Transmissionsschaltelement T13 transparent geschaltet. Wenn hingegen alle Transmissionsschaltelemente T11, T12, T13 der zweiten Menge M2 transparent sind, wird das zweite randständige Transmissionsschaltelement T13 opak geschaltet. Wenn jedoch das erste randständige Transmissionsschaltelement T11 opak ist und das zweite randständige Transmissionsschaltelement T13 transparent ist, wird das Transmissionsschaltelement T12, welches unmittelbar benachbart zu einem transparenten Transmissionsschaltelement der zweiten Menge ist, transparent geschaltet.

Wird hingegen nachfolgend zu Schritt 400 ein erster Schaltzustand des zweiten Schaltelements S2 innerhalb einer vorbestimmten Zeit empfangen 600, so wird abhängig vom bisherigen Zustand der Transmissionsschaltelemente T11, T12, T13 der zweiten Menge nunmehr eine andere Schaltung in einen neuen Zustand veranlasst.

Wenn alle Transmissionsschaltelemente T11, T12, T13 der zweiten Menge M2 opak sind, das erste randständige Transmissionsschaltelement wird das Transmissionsschaltelement T11 transparent geschaltet. Wenn hingegen alle Transmissionsschaltelemente T11, T12, T13 der zweiten Menge M2 transparent sind, wird das erste randständige Transmissionsschaltelement T11 opak geschaltet. Wenn jedoch das zweite randständige Transmissionsschaltelement T13 opak ist und das erste randständige Transmissionsschaltelement T11 transparent ist, wird das Transmissionsschaltelement T12, welches unmittelbar benachbart zu einem transparenten Transmissionsschaltelement der zweiten Menge M2 ist, transparent geschaltet.

In einer weiteren Ausgestaltung des Verfahrens kann zudem vorgesehen sein, dass innerhalb einer vorbestimmten Zeit nicht nur ein einziger Schaltzustand erfasst wird, sondern eine Abfolge von Schaltzuständen.

Beispielsweise kann auch vorgesehen sein, dass in einem Schritt 700 eine Abfolge von ersten Schaltzuständen des ersten Schaltelements S1 innerhalb einer vorbestimmten Zeit empfangen wird. Wenn das erste randständige Transmissionsschaltelement T11 der zweiten Menge M2 transparent ist, werden alle Transmissionsschaltelemente T11, T12, T13 der zweiten Menge opak geschaltet werden, wenn das erste randständige Transmissionsschaltelement T11 der zweiten Menge M2 opak ist, werden alle Transmissionsschaltelemente T11, T12, T13 der ersten Menge transparent geschaltet.

Es sei an dieser Stelle auch angemerkt, dass z.B. die zweite Menge M2 (z.B. für die Insassen im Heck) auch eine getrennte Steuerung mittels eigener Schaltelemente aufweisen kann. In einem Kraftfahrzeug kann zudem vorgesehen sein, dass die Steuerung der ersten Menge M1 als Mastersteuerung auf die dahinterliegenden Mengen einwirkt.

Es sei an dieser Stelle angemerkt, dass die vorbezeichnete Idee auch mit anderen Scheiben eines Fahrzeuges kombiniert werden kann. Beispielsweise kann die Steuerung auch eine Frontscheibe (Z.B. in Form eines schaltbaren Sonnenblendkeils) und/oder eine Heckscheibe einbeziehen. D.h. die zweite Menge M2 könnte auch (zumindest teilweise) auf einer Heckscheibe bzw. die erste Menge M1 könnte auch (zumindest teilweise) auf einer Frontscheibe angeordnet sein.

In einer Ausführungsform der Erfindung sind die Schaltelemente auf einer graphischen Bedienoberfläche GUI angeordnet. Durch Betätigung von Schaltelementen auf dem GUI kann das Schalten von Zuständen veranlasst werden. Die Schaltelemente können auch als Gestenerkennenung ("Wischen") implementiert sein. Ohne Beschränkung der Allgemeinheit kann auch durch Spracherkennung eine Schaltung bewirkt werden.

Anhand der Figur 8 kann aber auch eine ringpufferartige Ansteuerung verdeutlicht werden. Dabei kann die Steuerung wie ein Schieberegister angesehen werden, bei dem eine doppelte Anzahl von Zellen wie die zur Verfügung stehende Anzahl von Transmissionsschaltelementen (pro Menge) zur Verfügung gestellt wird. Durch diese wird eine Binärmaske ("111") entsprechend der Anzahl von Transmissionsschaltelementen geschoben, wobei eine "1" ein erster Zustand, z.B. opak, ist und "0" ein zweiter Zustand, z.B. transparent, ist. Durch eine Schiebeoperation kann die Richtung entsprechend vorgegeben werden in der die Transmissionsschaltelemente "opak" bzw. "transparent" werden. Beispielsweise kann durch drücken von S1 in Richtung der Pfeile verschoben werden indem die Zelle entsprechend des Transmissionsschaltelements T3 von "1" auf "0" wechselt während die führende "1" aus der Zelle entsprechend des Transmissionsschaltelements T1 in die nachfolgende unbeschaltete Zelle geschoben wird. Wird hingegen statt S1 das Schaltelement S2 gedrückt, so kehrt sich die Richtung um.

Ohne Beschränkung der Allgemeinheit erlaubt die Erfindung auch die Bereitstellung von Fahrzeugen mit einer Scheibe gemäß der Erfindung. Das Fahrzeug kann dabei insbesondere ein Land-, ein See-, ein Luft- oder ein Raumfahrzeug sein, ohne Mischformen hiervon auszuschließen.

Auch wenn die Erfindung vorstehend in Bezug auf eine Dachscheibe beschrieben wurde, ist der Erfindungsgedanke auch bei Verglasungen in Gebäuden, etc. in gleicher Weise anwendbar.

Die vorgestellte Steuerung erlaubt einem Nutzer eine intuitive Bedienung. Die Steuerung erlaubt eine lamellenartige Ansteuerung der Transmissionsschaltelemente. Dabei wird je nach Wahl der vorbestimmten Zeit der "opake" Teil Transmissionsschaltelement für Transmissionsschaltelement in seiner Gesamtwirkung auf den Benutzer vergrößert oder verkleinert. D.h. es kommt bei einer normalen Schaltzustandänderung zu einer allmählichen Änderung, wodurch die Augen der Nutzer sich langsamer an den Lichtwechsel gewöhnen können. D.h. die Änderung kann als ein Fortschreiten wahrgenommen werden.

Je nach verwendeter Technologie für die Transmissionsschaltelemente kann zusätzlich auch noch jedes einzelne Transmissionsschaltelement, das seinen Zustand ändern soll, mit einem Fadingeffekt ausgestattet werden. Auch dies führt zu einer allmählichen Änderung, wodurch die Augen der Nutzer sich langsamer an den Lichtwechsel gewöhnen können.

Die Steuerung kann aber auch vorsehen, dass z.B. durch Druck auf beide Schaltelemente die Größe des "opaken" Bereiches angepasst werden kann. Beispielsweise könnte durch Druck auf beide Schaltelemente ein Änderungsmodus aktiviert werden, in dem mittels erneutem Druck auf Schaltelement S1 die Größe des "opaken" Bereiches vergrößert wird, während mittels erneutem Druck auf Schaltelement S2 die Größe des "opaken" Bereiches verkleiner wird. Dies kann z.B. durch Änderung der Bitmaske erfolgen. Durch erneuten Druck auf beide Schaltelemente S1, S2 kann der Änderungsmodus verlassen werden. Alternativ oder zusätzlich kann der Änderungsmodus auch nach Ablauf einer vorbestimmten Zeit automatisch verlassen werden, sodass die Schaltelemente S1, S2 ihre zuvorige Funktion wiedererlangen.

Die genaue Ausformung der Transmissionsschaltelemente ist nur beispielhaft aufgezeigt. Andere Formen können in gleicher Weise verwirklicht werden.

### Bezugszeichenliste

- T1, T2, T3, T11, T12, T13: elektrisch steuerbare Transmissionsschaltelemente
- M1, M2: Menge
- S1, S2: Schaltelement
- GUI: Graphische Bedienoberfläche

### Verfahrensschritte

- 100: Empfangen eines ersten Schaltzustandes des ersten Schaltelements
- 200: Empfangen eines ersten Schaltzustandes des zweiten Schaltelements
- 300: Empfangen einer Abfolge von ersten Schaltzuständen des ersten Schaltelements
- 400: Empfangen einer Abfolge von ersten Schaltzuständen des zweiten Schaltelements
- 500: Empfangen eines ersten Schaltzustandes des ersten Schaltelements
- 600: Empfangen eines ersten Schaltzustandes des zweiten Schaltelements
- 700: Empfangen einer Abfolge von ersten Schaltzuständen des ersten Schaltelements

## Patentansprüche

1. Verfahren zur Steuerung einer Vielzahl von zugeordneten elektrisch steuerbaren Transmissionsschaltelementen (T1, T2, T3) einer ersten Menge (M1) in einer Dachscheibe für ein Fahrzeug, wobei die Transmissionsschaltelemente (T1, T2, T3) der ersten Menge (M1) hintereinander angeordnet sind, wobei ein erstes randständiges Transmissionsschaltelement (T1) und ein zweites randständiges Transmissionsschaltelement (T3) vorgesehen sind, wobei zur Steuerung zumindest ein erstes Schaltelement (S1) und ein zweites Schaltelement (S2) zur Verfügung stehen, aufweisend die Schritte:
• Empfangen (100) eines ersten Schaltzustandes des ersten Schaltelements (S1) innerhalb einer vorbestimmten Zeit, wobei,
• wenn alle Transmissionsschaltelemente (T1, T2, T3) der ersten Menge (M1) opak sind, das zweite randständige Transmissionsschaltelement (T3) transparent geschaltet wird,
• wenn alle Transmissionsschaltelemente (T1, T2, T3) der ersten Menge (M1) transparent sind, das zweite randständige Transmissionsschaltelement (T3) opak geschaltet wird,
• wenn das erste randständige Transmissionsschaltelement (T1) opak ist und das zweite randständige Transmissionsschaltelement (T3) transparent ist, das Transmissionsschaltelement (T2), welches unmittelbar benachbart zu einem transparenten Transmissionsschaltelement der ersten Menge ist, transparent geschaltet wird,
• Empfangen (200) eines ersten Schaltzustandes des zweiten Schaltelements (S2) innerhalb einer vorbestimmten Zeit, wobei,
• wenn alle Transmissionsschaltelemente (T1, T2, T3) der ersten Menge (M1) opak sind, das erste randständige Transmissionsschaltelement (T1) transparent geschaltet wird,
• wenn alle Transmissionsschaltelemente (T1, T2, T3) der ersten Menge (M1) transparent sind, das erste randständige Transmissionsschaltelement (T1) opak geschaltet wird,
• wenn das zweite randständige Transmissionsschaltelement (T3) opak ist und das erste randständige Transmissionsschaltelement (T1) transparent ist, das Transmissionsschaltelement (T2), welches unmittelbar benachbart zu einem transparenten Transmissionsschaltelement der ersten Menge ist, transparent geschaltet wird.

2. Verfahren nach Anspruch 1, weiterhin aufweisend den Schritt Empfangen (300) einer Abfolge von ersten Schaltzuständen des ersten Schaltelements (S1) innerhalb einer vorbestimmten Zeit, wobei,
• wenn das erste randständige Transmissionsschaltelement (T1) transparent ist, alle Transmissionsschaltelemente (T1, T2, T3) der ersten Menge opak geschaltet werden,
• wenn das erste randständige Transmissionsschaltelement (T1) opak ist, alle Transmissionsschaltelemente (T1, T2, T3) der ersten Menge transparent geschaltet werden.

3. Verfahren nach Anspruch 1 oder 2, wobei die Dachscheibe weiterhin eine zweite Menge (M2) von Transmissionsschaltelementen (T11, T12, T13) aufweist, wobei die Transmissionsschaltelemente (T11, T12, T13) der zweiten Menge (M2) hintereinander angeordnet sind, wobei ein erstes randständiges Transmissionsschaltelement (T11) und ein zweites randständiges Transmissionsschaltelement (T13) vorgesehen ist, wobei das erste randständige Transmissionsschaltelement (T11) der zweiten Menge (M2) benachbart zu dem zweiten randständigen Transmissionsschaltelement (T3) der ersten Menge ist, aufweisend den Schritt Empfangen (400) einer Abfolge von ersten Schaltzuständen des zweiten Schaltelements (S2) innerhalb einer vorbestimmten Zeit, wobei, nachfolgend hierzu
• Empfangen (500) eines ersten Schaltzustandes des ersten Schaltelements (S1) innerhalb einer vorbestimmten Zeit, wobei,
• wenn alle Transmissionsschaltelemente (T11, T12, T13) der zweiten Menge (M2) opak sind, das zweite randständige Transmissionsschaltelement (T13) transparent geschaltet wird,
• wenn alle Transmissionsschaltelemente (T11, T12, T13) der zweiten Menge (M2) transparent sind, das zweite randständige Transmissionsschaltelement (T13) opak geschaltet wird,
• wenn das erste randständige Transmissionsschaltelement (T11) opak ist und das zweite randständige Transmissionsschaltelement (T13) transparent ist, das Transmissionsschaltelement (T12), welches unmittelbar benachbart zu einem transparenten Transmissionsschaltelement der zweiten Menge ist, transparent geschaltet wird,
• Empfangen (600) eines ersten Schaltzustandes des zweiten Schaltelements (S2) innerhalb einer vorbestimmten Zeit, wobei,
• wenn alle Transmissionsschaltelemente (T11, T12, T13) der zweiten Menge (M2) opak sind, das erste randständige Transmissionsschaltelement (T11) transparent geschaltet wird,
• wenn alle Transmissionsschaltelemente (T11, T12, T13) der zweiten Menge (M2) transparent sind, das erste randständige Transmissionsschaltelement (T11) opak geschaltet wird,
• wenn das zweite randständige Transmissionsschaltelement (T13) opak ist und das erste randständige Transmissionsschaltelement (T11) transparent ist, das Transmissionsschaltelement (T12), welches unmittelbar benachbart zu einem transparenten Transmissionsschaltelement der zweiten Menge ist, transparent geschaltet wird.

4. Verfahren nach Anspruch 3, weiterhin aufweisend den Schritt Empfangen (700) einer Abfolge von ersten Schaltzuständen des ersten Schaltelements (S1) innerhalb einer vorbestimmten Zeit, wobei,
• wenn das erste randständige Transmissionsschaltelement (T11) der zweiten Menge transparent ist, alle Transmissionsschaltelemente (T11, T12, T13) der zweiten Menge opak geschaltet werden,
• wenn das erste randständige Transmissionsschaltelement (T11) der zweiten Menge opak ist, alle Transmissionsschaltelemente (T11, T12, T13) der ersten Menge transparent geschaltet werden.

5. Dachscheibe mit einer Vielzahl von zugeordneten elektrisch steuerbaren Transmissionsschaltelementen (T1, T2, T3) einer ersten Menge (M1), wobei die Transmissionsschaltelemente (T1, T2, T3) der ersten Menge (M1) hintereinander angeordnet sind, wobei ein erstes randständiges Transmissionsschaltelement (T1) und ein zweites randständiges Transmissionsschaltelement (T3) vorgesehen sind, wobei zur Steuerung zumindest ein erstes Schaltelement (S1) und ein zweites Schaltelement (S2) zur Verfügung stehen, wobei das erste Schaltelement (S1) und das zweite Schaltelement (S2) zur Steuerung eines Verfahrens nach einem der vorhergehenden Ansprüche 1 oder 2 eingerichtet sind.

6. Dachscheibe nach Anspruch 5, **dadurch gekennzeichnet, dass** die Dachscheibe weiterhin eine zweite Menge (M2) von Transmissionsschaltelementen (T11, T12, T13) aufweist, wobei die Transmissionsschaltelemente (T11, T12, T13) der zweiten Menge (M2) hintereinander angeordnet sind, wobei ein erstes randständiges Transmissionsschaltelement (T11) und ein zweites randständiges Transmissionsschaltelement (T13) vorgesehen ist, wobei das erste randständige Transmissionsschaltelement (T11) der zweiten Menge (M2) benachbart zu dem zweiten randständigen Transmissionsschaltelement (T3) der ersten Menge ist, wobei zur Steuerung zumindest ein erstes Schaltelement (S1) und ein zweites Schaltelement (S2) zur Verfügung stehen, wobei das erste Schaltelement (S1) und das zweite Schaltelement (S2) zur Steuerung eines Verfahrens nach einem der vorhergehenden Ansprüche 1 bis 4 eingerichtet ist.

7. Dachscheibe nach Anspruch 5 oder 6, **dadurch gekennzeichnet, dass** das erste Schaltelement (S1) und das zweite Schaltelement (S2) auf einer Seite der Dachscheibe angeordnet sind oder auf einer graphischen Bedienoberfläche angeordnet sind.

8. Dachscheibe nach einem der vorhergehenden Ansprüche 5 bis 7, **dadurch gekennzeichnet, dass** die Transmissionsschaltelemente PDLC Elemente aufweisen.

9. Fahrzeug mit einer Scheibe nach einem der vorhergehenden Ansprüche 5 bis 8.

10. Fahrzeug nach Anspruch 9, **dadurch gekennzeichnet, dass** das Fahrzeug ein Land-, See-, Luft- oder Raumfahrzeug ist.

## Claims

1. Method for controlling a plurality of assigned electrically controlled transmission switch elements (T1, T2, T3) of a first set (M1) in a vehicle sunroof, wherein the transmission switch elements (T1, T2, T3) of the first set (M1) are arranged one behind the other, wherein a first peripheral transmission switch element (T1) and a second peripheral transmission switch element (T3) are provided, wherein at least one first switch element (S1) and one second switch element (S2) are available for control, comprising the steps:
- Receiving (100) a first switching state of the first switch element (S1) within a predetermined time, wherein,
- if all transmission switch elements (T1, T2, T3) of the first set (M1) are opaque, the second peripheral transmission switch element (T3) is switched to transparent,
- if all transmission switch elements (T1, T2, T3) of the first set (M1) are transparent, the second peripheral transmission switch element (T3) is switched to opaque,
- if the first peripheral transmission switch element (T1) is opaque and the second peripheral transmission switch element (T3) is transparent, the transmission switch element (T2) that is immediately adjacent a transparent transmission switch element of the first set is switched to transparent,
- Receiving (200) a first switching state of the second switch element (S2) within a predetermined time, wherein,
- if all transmission switch elements (T1, T2, T3) of the first set (M1) are opaque, the first peripheral transmission switch element (T1) is switched to transparent,
- if all transmission switch elements (T1, T2, T3) of the first set (M1) are transparent, the first peripheral transmission switch element (T1) is switched to opaque,
- if the second peripheral transmission switch element (T3) is opaque and the first peripheral transmission switch element (T1) is transparent, the transmission switch element (T2) that is immediately adjacent a transparent transmission switch element of the first set is switched to transparent.

2. Method according to claim 1, further comprising the step of receiving (300) a sequence of first switching states of the first switch element (S1) within a predetermined time, wherein,
- if the first peripheral transmission switch element (T1) is transparent, all transmission switch elements (T1, T2, T3) of the first set are switched to opaque,
- if the first peripheral transmission switch element (T1) is opaque, all transmission switch elements (T1, T2, T3) of the first set are switched to transparent.

3. Method according to claim 1 or 2, wherein the sunroof further comprises a second set (M2) of transmission switch elements (T11, T12, T13), wherein the transmission switch elements (T11, T12, T13) of the second set (M2) are arranged one behind the other, wherein a first peripheral transmission switch element (T11) and a second peripheral transmission switch element (T13) are provided, wherein the first peripheral transmission switch element (T11) of the second set (M2) is adjacent the second peripheral transmission switch element (T3) of the first set, comprising the step of receiving (400) a sequence of first switching states of the second switch element (S2) within a predetermined time, with, following that
- Receiving (500) a first switching state of the first switch element (S1) within a predetermined time, wherein,
- if all transmission switch elements (T11, T12, T13) of the second set (M2) are opaque, the second peripheral transmission switch element (T13) is switched to transparent,
- if all transmission switch elements (T11, T12, T13) of the second set (M2) are transparent, the second peripheral transmission switch element (T13) is switched to opaque,
- if the first peripheral transmission switch element (T11) is opaque and the second peripheral transmission switch element (T13) is transparent, the transmission switch element (T12) that is immediately adjacent a transparent transmission switch element of the second set is switched to transparent,
- Receiving (600) a first switching state of the second switch element (S2) within a predetermined time, wherein,
- if all transmission switch elements (T11, T12, T13) of the second set (M2) are opaque, the first peripheral transmission switch element (T11) is switched to transparent,
- if all transmission switch elements (T11, T12, T13) of the second set (M2) are transparent, the first peripheral transmission switch element (T11) is switched to opaque,
- if the second peripheral transmission switch element (T13) is opaque and the first peripheral transmission switch element (T11) is transparent, the transmission switch element (T12) that is immediately adjacent a transparent transmission switch element of the second set is switched to transparent.

4. Method according to claim 3, further comprising the step of receiving (700) a sequence of first switching states of the first switch element (S1) within a predetermined time, wherein,
- if the first peripheral transmission switch element (T11) of the second set is transparent, all transmission switch elements (T11, T12, T13) of the second set are switched to opaque,
- if the first peripheral transmission switch element (T11) of the second set is opaque, all transmission switch elements (T11, T12, T13) of the first set are switched to transparent.

5. Sunroof with a plurality of assigned electrically controlled transmission switch elements (T1, T2, T3) of a first set (M1), wherein the transmission switch elements (T1, T2, T3) of the first set (M1) are arranged one behind the other, wherein a first peripheral transmission switch element (T1) and a second peripheral transmission switch element (T3) are provided, wherein at least one first switch element (S1) and one second switch element (S2) are available for control, wherein the first switch element (S1) and the second switch element (S2) are set up to control a method according to one of the preceding claims 1 or 2.

6. Sunroof according to claim 5, **characterized in that** the sunroof further comprises a second set (M2) of transmission switch elements (T11, T12, T13), wherein the transmission switch elements (T11, T12, T13) of the second set (M2) are arranged one behind the other, wherein a first peripheral transmission switch element (T11) and a second peripheral transmission switch element (T13) are provided, wherein the first peripheral transmission switch element (T11) of the second set (M2) is adjacent the second peripheral transmission switch element (T3) of the first set, wherein at least one first switch element (S1) and one second switch element (S2) are available for control, wherein the first switch element (S1) and the second switch element (S2) are set up to control a method according to one of the preceding claims 1 through 4.

7. Sunroof according to claim 5 or 6, **characterized in that** the first switch element (S1) and the second switch element (S2) are arranged on one side of the sunroof or on a graphical user interface.

8. Sunroof according to one of the preceding claims 5 through 7, **characterized in that** the transmission switch elements comprise PDLC elements.

9. Vehicle with a sunroof according to one of the preceding claims 5 through 8.

10. Vehicle according to claim 9, **characterized in that** the vehicle is a land, water, air, or spacecraft.

## Revendications

1. Procédé de commande d'une pluralité d'éléments de commutation de transmission (T1, T2, T3) associés, commandés électriquement, d'un premier ensemble (M1) dans un toit ouvrant de véhicule, les éléments de commutation de transmission (T1, T2, T3) du premier ensemble (M1) étant disposés les uns derrière les autres, un premier élément de commutation de transmission périphérique (T1) et un deuxième élément de commutation de transmission périphérique (T3) étant prévus, au moins un premier élément de commutation (S1) et un deuxième élément de commutation (S2) étant disponibles pour la commande, comprenant les étapes suivantes :
- réception (100) d'un premier état de commutation du premier élément de commutation (S1) dans un temps prédéterminé, dans lequel,
- si tous les éléments de commutation de transmission (T1, T2, T3) du premier ensemble (M1) sont opaques, le deuxième élément de commutation de transmission périphérique (T3) est commuté sur transparent,
- si tous les éléments de commutation de transmission (T1, T2, T3) du premier ensemble (M1) sont transparents, le second élément de commutation de transmission périphérique (T3) est commuté sur opaque,
- si le premier élément de commutation de transmission périphérique (T1) est opaque et le second élément de commutation de transmission périphérique (T3) est transparent, l'élément de commutation de transmission (T2) qui est immédiatement adjacent à un élément de commutation de transmission transparent du premier ensemble est commuté sur transparent,
- réception (200) d'un premier état de commutation du deuxième élément de commutation (S2) dans un temps prédéterminé, dans lequel,
- si tous les éléments de commutation de transmission (T1, T2, T3) du premier ensemble (M1) sont opaques, le premier élément de commutation de transmission périphérique (T1) est commuté sur transparent,
- si tous les éléments de commutation de transmission (T1, T2, T3) du premier ensemble (M1) sont transparents, le premier élément de commutation de transmission périphérique (T1) est commuté sur opaque,
- si le deuxième élément de commutation de transmission périphérique (T3) est opaque et le premier élément de commutation de transmission périphérique (T1) est transparent, l'élément de commutation de transmission (T2) qui est immédiatement adjacent à un élément de commutation de transmission transparent du premier ensemble est commuté en transparent.

2. Procédé selon la revendication 1, comprenant en outre l'étape de réception (300) d'une séquence de premiers états de commutation du premier élément de commutation (S1) dans un temps prédéterminé, dans lequel,
- si le premier élément de commutation de transmission périphérique (T1) est transparent, tous les éléments de commutation de transmission (T1, T2, T3) du premier ensemble sont commutés sur opaque,
- si le premier élément de commutation de transmission périphérique (T1) est opaque, tous les éléments de commutation de transmission (T1, T2, T3) du premier ensemble sont commutés sur transparent.

3. Procédé selon la revendication 1 ou 2, dans lequel le toit ouvrant comprend en outre un deuxième ensemble (M2) d'éléments de commutation de transmission (T11, T12, T13), dans lequel les éléments de commutation de transmission (T11, T12, T13) du deuxième ensemble (M2) sont disposés les uns derrière les autres, dans lequel un premier élément de commutation de transmission périphérique (T11) et un deuxième élément de commutation de transmission périphérique (T13) sont prévus, dans lequel le premier élément de commutation de transmission périphérique (T11) du deuxième ensemble (M2) est adjacent au deuxième élément de commutation de transmission périphérique (T3) du premier ensemble, comprenant l'étape consistant à recevoir (400) une séquence de premiers états de commutation du deuxième élément de commutation (S2) dans un temps prédéterminé, avec, à la suite de cela
- réception (500) d'un premier état de commutation du premier élément de commutation (S1) dans un temps prédéterminé, dans lequel,
- si tous les éléments de commutation de transmission (T11, T12, T13) du deuxième ensemble (M2) sont opaques, le deuxième élément de commutation de transmission périphérique (T13) est commuté sur transparent,
- si tous les éléments de commutation de transmission (T11, T12, T13) du deuxième ensemble (M2) sont transparents, le deuxième élément de commutation de transmission périphérique (T13) est commuté sur opaque,
- si le premier élément de commutation de transmission périphérique (T11) est opaque et le second élément de commutation de transmission périphérique (T13) est transparent, l'élément de commutation de transmission (T12) qui est immédiatement adjacent à un élément de commutation de transmission transparent du second ensemble est commuté en transparent,
- réception (600) d'un premier état de commutation du deuxième élément de commutation (S2) dans un temps prédéterminé, dans lequel,
- si tous les éléments de commutation de transmission (T11, T12, T13) du deuxième ensemble (M2) sont opaques, le premier élément de commutation de transmission périphérique (T11) est commuté sur transparent,
- si tous les éléments de commutation de transmission (T11, T12, T13) du deuxième ensemble (M2) sont transparents, le premier élément de commutation de transmission périphérique (T11) est commuté sur opaque,
- si le second élément de commutation de transmission périphérique (T13) est opaque et le premier élément de commutation de transmission périphérique (T11) est transparent, l'élément de commutation de transmission (T12) qui est immédiatement adjacent à un élément de commutation de transmission transparent du second ensemble est commuté en transparent.

4. Procédé selon la revendication 3, comprenant en outre l'étape de réception (700) d'une séquence de premiers états de commutation du premier élément de commutation (S1) dans un temps prédéterminé, dans lequel,
- si le premier élément de commutation de transmission périphérique (T11) du deuxième ensemble est transparent, tous les éléments de commutation de transmission (T11, T12, T13) du deuxième ensemble sont commutés sur opaque,
- si le premier élément de commutation de transmission périphérique (T11) du second ensemble est opaque, tous les éléments de commutation de transmission (T11, T12, T13) du premier ensemble sont commutés sur transparent.

5. Toit ouvrant avec une pluralité d'éléments de commutation de transmission (T1, T2, T3) associés, commandés électriquement, d'un premier ensemble (M1), dans lequel les éléments de commutation de transmission (T1, T2, T3) du premier ensemble (M1) sont disposés les uns derrière les autres, dans lequel un premier élément de commutation de transmission périphérique (T1) et un deuxième élément de commutation de transmission périphérique (T3) sont prévus, dans lequel au moins un premier élément de commutation (S1) et un deuxième élément de commutation (S2) sont disponibles pour la commande, dans lequel le premier élément de commutation (S1) et le deuxième élément de commutation (S2) sont configurés pour commander un procédé selon l'une des revendications précédentes 1 ou 2.

6. Toit ouvrant selon la revendication 5, **caractérisé en ce que** le toit ouvrant comprend en outre un deuxième ensemble (M2) d'éléments de commutation de transmission (T11, T12, T13), dans lequel les éléments de commutation de transmission (T11, T12, T13) du deuxième ensemble (M2) sont disposés les uns derrière les autres, dans lequel un premier élément de commutation de transmission périphérique (T11) et un deuxième élément de commutation de transmission périphérique (T13) sont prévus, dans lequel le premier élément de commutation de transmission périphérique (T11) du deuxième ensemble (M2) est adjacent au deuxième élément de commutation de transmission périphérique (T3) du premier ensemble, dans lequel au moins un premier élément de commutation (S1) et un deuxième élément de commutation (S2) sont disponibles pour la commande, dans lequel le premier élément de commutation (S1) et le deuxième élément de commutation (S2) sont configurés pour commander un procédé selon l'une des revendications précédentes 1 à 4.

7. Toit ouvrant selon la revendication 5 ou 6, **caractérisé en ce que** le premier élément de commutation (S1) et le deuxième élément de commutation (S2) sont disposés sur un côté du toit ouvrant ou sur une interface utilisateur graphique.

8. Toit ouvrant selon l'une des revendications précédentes 5 à 7, **caractérisé en ce que** les éléments de commutation de transmission comprennent des éléments PDLC.

9. Véhicule équipé d'un toit ouvrant selon l'une des revendications précédentes 5 à 8.

10. Véhicule selon la revendication 9, **caractérisé en ce que** le véhicule est un véhicule terrestre, aquatique, aérien ou spatial.
